# EUROPEAN PATENT SPECIFICATION

(11) **EP 3 388 177 B1**
(45) Date of publication and mention of the grant of the patent: **20.01.2021**
(21) Application number: 18165459.1
(22) Date of filing: 03.04.2018
(51) Int. Cl.: B23D 47/00, B23D 47/12, B27G 19/04, B27B 9/02, B23D 59/00

(54) **HAND-HELD CUTTING TOOL**
HANDSCHNEIDWERKZEUG
OUTIL DE DÉCOUPE PORTABLE

(30) Priority: 10.04.2017 CN 201710230137; 10.04.2017 CN 201720371779 U
(43) Date of publication of application: 17.10.2018
(73) Proprietor: Nanjing Chervon Industry Co., Ltd., 211106 Nanjing Jiangsu (CN)
(72) Inventor: WANG, Shaojun, 211106 Nanjing Jiangsu (CN); WANG, Chuanxiang, 211106 Nanjing Jiangsu (CN)
(74) Representative: Sun, Yiming

(56) References cited:
- WO-A1-2011/025493
- GB-A- 2 457 173
- US-A1- 2010 009 608
- US-B1- 9 009 982
- US-B2- 9 434 015

## Description

### TECHNICAL FIELD

The present disclosure relates to hand-held cutting tools and, in particular, to circular saws.

### BACKGROUND

Document US 9 434 015 B2 discloses a hand-held cutting tool comprising a cutting member for cutting a workpiece; a motor having an output shaft configured to rotate around a first axis; a housing provided with a handle portion for a user to hold; a baseplate having a supporting surface connected to the housing and rotatable about a second axis, wherein the supporting surface is disposed on a side of the baseplate away from the housing; a drive shaft configured to drive the cutting member to rotate around a third axis perpendicular to the first axis; a transmission device configured to realize transmission between the output shaft and the drive shaft; a shield configured to block chips around the cutting member and enclose at least in part the cutting member in a circumferential direction of the third axis; wherein the first axis of the output shaft obliquely intersects the supporting surface of the baseplate, the supporting surface is parallel to the third axis, the shield and the handle portion are disposed on a same side of the supporting surface, and the second axis is parallel to the third axis of the cutting member; a shaft lock device configured to lock rotation of the driving drive shaft; wherein the shaft lock device comprises an operation button to be pressed by the user, the shaft locking device locking rotation of the drive shaft when the operation button is pressed.

As a hand-held cutting tool, a circular saw is popular with users due to its small and exquisite design, ease of use and functional diversity.

However, the structure of the existing circular saw is not reasonable, the overall size of the circular saw is large, and the circular saw is not balanced well enough in use.

In addition, a dust suction inlet of an existing circular saw is usually disposed at a position not allowing the dust suction inlet to effectively suck in dust from saw blades mounted at different positions.

### SUMMARY

According to the invention there is provided a hand-held cutting tool defined by the features of claim 1.

Further, the handle portion of the housing may be symmetrically arranged about a medium plane parallel to the first axis, and the shield may be disposed on a side of the medium plane of the handle portion.

Further, the hand-held cutting tool includes an operating member for the user to control the motor. The operating member may be disposed on a side of a plane defined by the first axis around which the output shaft rotates and the third axis around which the cutting member rotates. The operating member and the baseplate may be disposed on a same side of the housing.

Further, the hand-held cutting tool includes a battery pack detachably coupled to the housing in a first direction and configured to power the motor. The first direction obliquely intersects the first axis.

Further, the handle portion extends along a direction of the first axis, and an included angle between the first direction and the first axis may be greater than or equal to 30 degrees and less than or equal to 60 degrees.

Further, the motor may be at least partially disposed in a space enclosed by the handle portion.

Further, the shield may include a partition plate dividing a space enclosed by the shield into a first mounting area and a second mounting area in an axial direction about the third axis.

The cutting member is optionally mounted to a first axial position so that the cutting member is disposed in the first mounting area or mounted to a second axial position so that the cutting member is disposed in the second mounting area.

Further, the shield may be provided with a chip discharging passage for discharging chips from an interior of the shield. The chip discharging passage communicates with the first mounting area and the second mounting area separately.

Further, the shield may be provided with a chip discharging tube for forming the chip discharging passage. The hand-held cutting tool may further include a tube cap configured to close the chip discharging tube.

Further, the shield may be provided with a limiting end surface used to guide the hand-held cutting tool to cut the workpiece along a straight line, the limiting end surface being formed on an outer surface of the shield farthest from the housing along a direction of the third axis with the limiting end surface being perpendicular to the third axis.

Further, the hand-held cutting tool may further include a protective member detachably mounted on the outer surface of the shield. The protective member covers at least the limiting end surface.

Further, the shield may be made of a metal material, and the protective member may be made of a plastic material.

Further, the baseplate may have at least a first rotation position and a second rotation position relative to the housing. An included angle between the supporting surface and the first axis when the baseplate is at the first rotation position may be smaller than that when the baseplate is at the second rotation position. The hand-held cutting tool may further include a biasing member configured to bias the baseplate to rotate from the first rotation position to the second rotation position.

Further, the shield may include a rear shield portion including a mounting portion through which the shield is mounted to the housing, and a front shield portion disposed a side of the rear shield portion away from the housing and provided with an inward edge extending inwards in a radial direction of the third axis. The rear shield portion and the front shield portion may be detachably connected to each other and form the shield when assembled together.

According to the invention there is further provided a hand-held cutting tool defined by the features of claim 9.

Further, this hand-held cutting tool includes an auxiliary handle for the user to hold with the other hand when the user is holding the handle portion with one hand. The operating member and the auxiliary handle may be disposed on two sides of a plane defined by the first axis around which the output shaft rotates and the third axis around which the cutting member rotates.

The present disclosure has advantages that the hand-held cutting tool is well-structured and better-balanced.

### BRIEF DESCRIPTION OF DRAWINGS

FIG. 1 is a perspective view of an exemplary hand-held cutting tool.
FIG. 2 is a bottom view of the hand-held cutting tool of FIG. 1.
FIG. 3 is a front view of the hand-held cutting tool of FIG. 1.
FIG. 4 is a sectional view of the hand-held cutting tool of FIG. 2 along a line B-B.
FIG. 5 is a sectional view of the hand-held cutting tool of FIG. 3 along a line C-C.
FIG. 6 is a back view of the hand-held cutting tool of FIG. 1, in which a baseplate is at a first rotation position.
FIG. 7 is a back view of the hand-held cutting tool of FIG. 1, in which the baseplate is at a second rotation position.
FIG. 8 is a schematic view of a structure of FIG. 3 when a battery pack is separated from a housing.
FIG. 9 is a schematic view of a structure of FIG. 1 when a protective member is separated from a shield.
FIG. 10 is a perspective view of a shield of FIG. 1.
FIG. 11 is a perspective view of a shield and a cutting member of FIG. 1, in which the cutting member is in a first mounting area.
FIG. 12 is a perspective view of a shield and a cutting member of FIG. 1, in which the cutting member is in a second mounting area.
FIG. 13 is a perspective view of a further exemplary hand-held cutting tool.
FIG. 14 is a schematic view of a structure of FIG. 13 when a protective member is separated from a shield.

### DETAILED DESCRIPTION

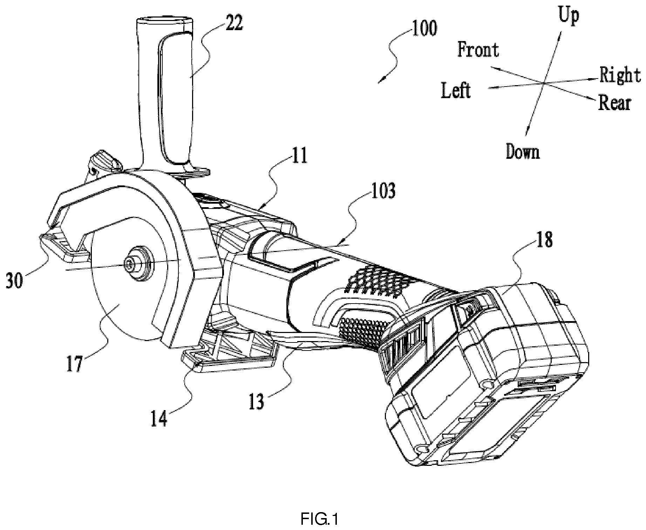

A hand-held cutting tool 100, shown by way of example in FIG. 1, is specifically a mini electric circular saw that can be provided with different working accessories for cutting wood, cutting aluminum sheets, cutting ceramic tiles and sanding workpieces, etc.

As illustrated in FIGS. 1 to 5, the hand-held cutting tool 100 includes a housing 11, a motor 12, an operating member 13, a baseplate 14, a transmission device 15, a drive device 16, a cutting member 17, and a shield 30.

The housing 11 is used for accommodating the motor 12, the transmission device 15, the drive device 16, etc. The housing 11 is further provided with a handle portion 111 for a user to hold. The motor 12 has an output shaft 121 rotating around a first axis 101. The output shaft 121 is disposed in the housing 11 along the direction of the first axis 101. The handle portion 111 extends substantially along the direction of first axis 101. The motor 12 is disposed, at least in part, in a space enclosed by the handle portion 111. The handle portion 111 is further arranged symmetrical with respect to a medium plane 104 parallel to the first axis 101. In this illustrated example, the motor 12 is an electric motor, and the hand-held cutting tool 100 further includes a battery pack 18 for powering the electric motor. The operating member 13 is used by the user to control whether to start the motor 12. The operating member 13 and the baseplate 14 are disposed on the same side of the housing 11 for user's convenience.

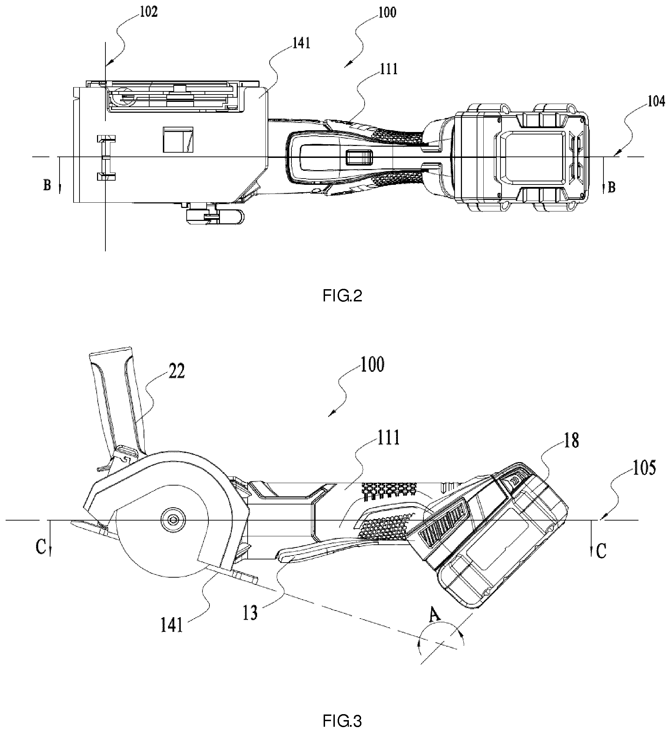

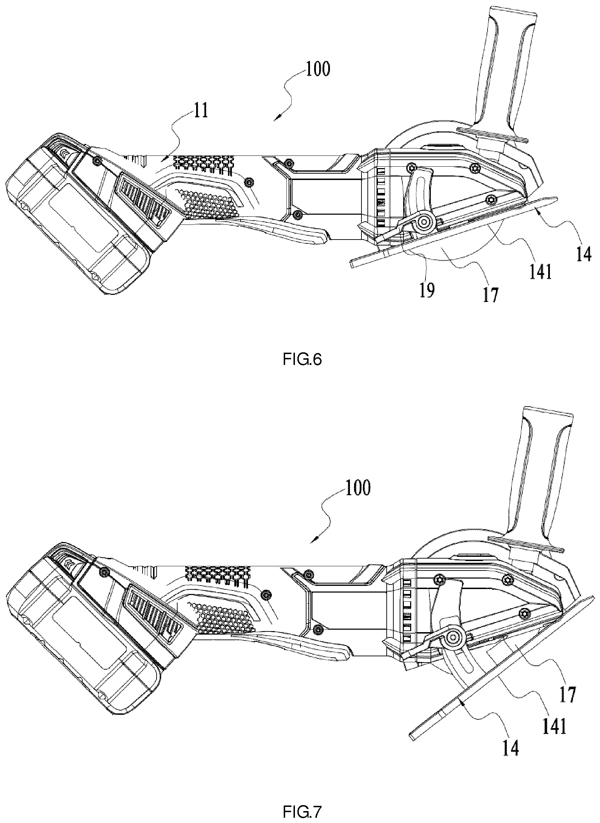

As illustrated in FIGS. 2, 6 and 7, the baseplate 14 rotatably connects to the housing 11 with a second axis 102 as an axis. The second axis 102 is perpendicular to the first axis 101 around which the output shaft 121 rotates. The baseplate 14 further includes a supporting surface 141 for guiding the hand-held cutting tool 100 to move over a surface of a workpiece. The supporting surface 141 supports the entire hand-held cutting tool 100 on the workpiece. The supporting surface 141 is in a plane parallel to the second axis 102. The supporting surface 141 obliquely intersects the first axis 101. In a direction perpendicular to the supporting surface 141, the supporting surface 141 is disposed on a side of the baseplate 14 away from the housing 11.

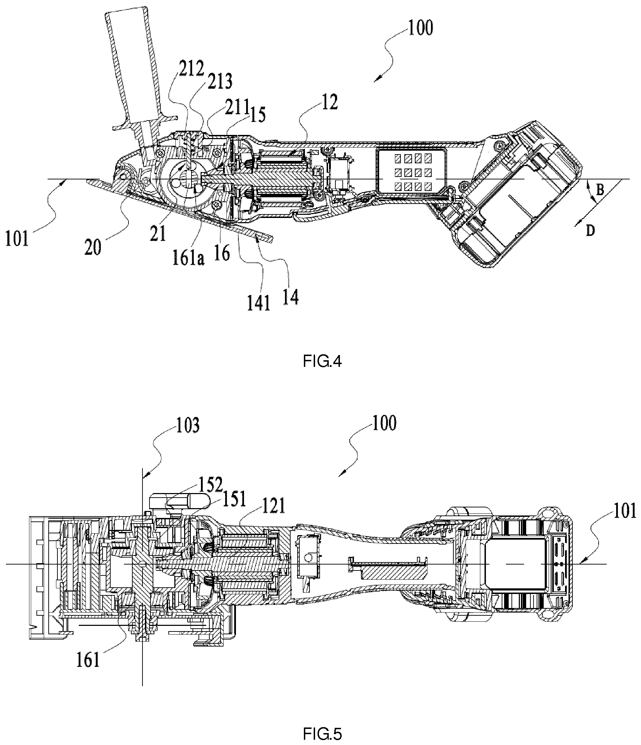

As illustrated in FIGS. 4 to 7, the baseplate 14 can rotate to at least a first rotation position and a second rotation position when rotating relative to the housing 11. When the baseplate 14 rotates, relative to the housing 11, to the first rotation position, an included angle between the supporting surface 141 and the first axis 101 that obliquely intersects the supporting surface 141 is the smallest. At this time, in the direction perpendicular to the supporting surface 141, at least a part of the cutting member 17 protrudes to the side of the baseplate 14, where the supporting surface 141 is provided. At this time, the user may use the hand-held cutting tool 100 to cut the workpiece into multiple sections. When the baseplate 14 rotates, relative to the housing 11, to the second rotation position, the included angle between the supporting surface 141 and the first axis 101 that obliquely intersects the supporting surface 141 is the largest. At this time, in the direction perpendicular to the supporting surface 141, the entire cutting member 17 is on a side of the baseplate 14 away from the supporting surface 141. At this time, the user may use the hand-held cutting tool 100 to cut holes in the workpiece.

Specifically, the hand-held cutting tool 100 further includes a locking member 19 for locking the position of the baseplate 14 relative to the housing 11 and a biasing member 20 for biasing the baseplate 14 to rotate from the first rotation position to the second rotation position. The locking member 19 has a locked state and an unlocked state. When the locking member 19 is in the locked state, the position of the baseplate 14 relative to the housing 11 is locked. When the locking member 19 is in the unlocked state, the position of the baseplate 14 relative to the housing 11 is released. When the user needs to cut the workpiece into sections using the hand-held cutting tool 100, the user may manipulate the baseplate 14 such that the baseplate 14 rotates against the bias of the biasing member 20 to the first rotation position, and then lock the baseplate 14 at the first rotation position through the locking member 19. When the user places the locking member 19 in the unlocked state, the biasing member 20 biases the baseplate 14 such that the baseplate 14 rotates to the second rotation position. At this time, the user may use the hand-held cutting tool 100 to cut holes in the workpiece.

The transmission device 15 is configured to realize transmission between the output shaft 121 and the drive device 16. The transmission device 15 includes a first bevel gear 151 and a second bevel gear 152 cooperating with each other. The drive device 16 includes a drive shaft 161 for driving the cutting member 17 to rotate around a third axis 103. The drive shaft 161 is disposed in the housing 11 along a direction of the third axis 103. The first bevel gear 151 is formed at or connected to an end of the output shaft 121 close to the drive shaft 161. The cutting member 17 is mounted at an end of the drive shaft 161, and the second bevel gear 152 is formed at or connected to another end of the drive shaft 161. The second bevel gear 152 is engaged with the first bevel gear 151 so that when the output shaft 121 rotates around the first axis 101, the drive shaft 161 can rotate around the third axis 103, and the cutting member 17 is driven to rotate around the third axis 103.

In this example, the cutting member 17 may be a circular saw blade, a grinding disc, etc., and a plane where the cutting member 17 is located is parallel to the median plane 104 of the handle portion 111, and the third axis 103 around which the cutting member 17 rotates is perpendicular to the median plane 104 of the handle portion 111. In this way, when the user holds the hand-held cutting tool 100, the cutting member 17 is located on the left side of the user's hand holding the handle portion 111.

As illustrated in FIGS. 4 and 5, the hand-held cutting tool 100 further includes a shaft lock device 21 configured to lock the rotation of the drive shaft 161. The shaft lock device 21 includes a lock pin 211, an operation button 212 and an elastic member 213. Specifically, the drive shaft 161 is provided with a hole 161a into which the lock pin 211 can be inserted. The operation button 212 is operated by the user to insert the lock pin 211 into the hole 161a. The elastic member 213 is configured to bias the lock pin 211 such that the lock pin 211 exits the hole 161a.

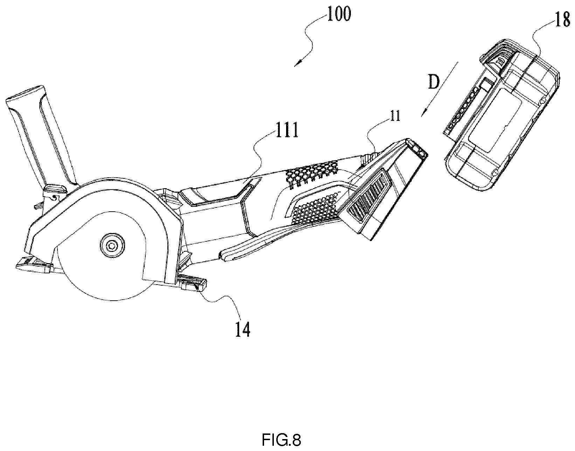

As illustrated in FIGS. 3 and 8, the battery pack 18 can be detachably coupled to the housing 11 in the first direction D. Specifically, along the direction of the first axis 101, the battery pack 18 is connected to a side of the handle portion 111 away from the baseplate 14.

The first direction D, along which the battery pack 18 is coupled to the handle portion 111, also obliquely intersects the first axis 101. The first direction D also obliquely intersects the supporting surface 141. As illustrated in FIGS. 3 and 4, an included angle A between the first direction D along which the battery pack 18 is inserted and the supporting surface 141 is an obtuse angle, and an included angle B between the first direction D along which the battery pack 18 is inserted and the first axis 101 is greater than or equal to 30 degrees and less than or equal to 60 degrees. As a result, the stability of user operation and the balance of the complete machine are improved. In addition, the battery pack 18 and the baseplate 14 are disposed at two ends of the handle portion 111, and the center of gravity of the hand-held cutting tool 100 is located at the handle portion 111, so that the balance of the complete machine is further improved.

In addition, for convenience of user operation, the hand-held cutting tool 100 further includes an auxiliary handle 22 detachably connected to the housing 11. The auxiliary handle 22 is disposed at an end of the housing 11 away from the battery pack 18. In this way, the user can hold the handle portion 111 and the auxiliary handle 22 with two hands respectively, thereby improving the stability of the operation. The first axis 101 around which the output shaft 121 rotates and the third axis 103 around which the cutting member 17 rotates define a plane 105. The operating member 13 is disposed on a side of the plane 105. The auxiliary handle 22 and the operating member 13 are located at two sides of the plane 105 respectively. The plane 105 also passes through the cutting member 17.

As illustrated in FIG. 1, the shield 30 is mounted on the housing 11 to be positioned on a side of the median plane 104 of the handle portion 111. The shield 30 is configured to block chips around the cutting member 17. The shield 30 partially encloses the cutting member 17 in a circumferential direction of the third axis 103 around which the cutting member 17 rotates.

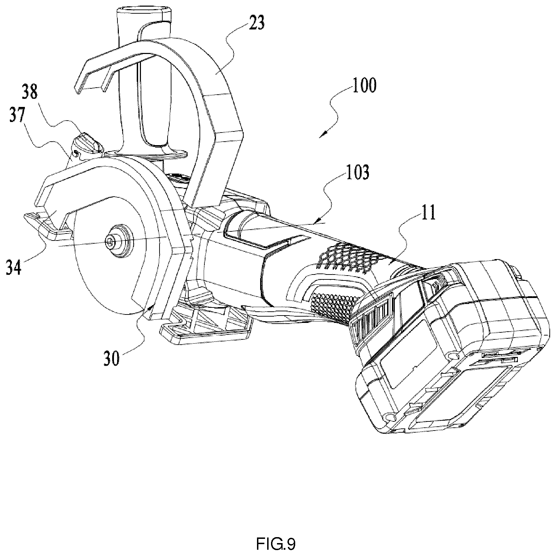

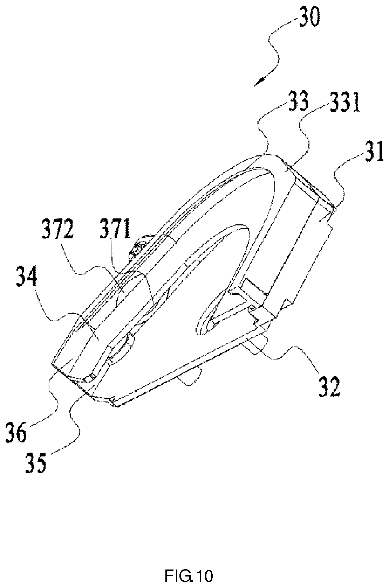

Specifically, as illustrated in FIGS. 1, 9 and 10, the shield 30 includes an enclosing portion 31, a mounting portion 32 and an inward edge 33. Along the direction of the third axis 103, the mounting portion 32 and the inward edge 33 are provided on two sides of the enclosing portion 31. The enclosing portion 31 is configured such that the cutting member 17 is enclosed by the shield 30. The mounting portion 32 is configured such that the shield 30 is mounted to the housing 11 by the mounting portion 32. The inward edge 33 extends inwards from the enclosing portion 31 in a radial direction of the third axis 103.

The inward edge 33 is provided with a limiting end surface 331. Along the direction of the third axis 103, the limiting end surface 331 is formed on an outer surface of the shield 30 farthest from the housing 11. The limiting end surface 331 is perpendicular to the third axis 103. The limiting end surface 331 may be configured to guide the hand-held cutting tool 100 to perform operations like cutting and sanding. However, the limiting end surface 331 may scratch the workpiece. The limiting end surface 331 is used to guide the hand-held cutting tool 100 to cut the workpiece along a straight line. In view of this, the hand-held cutting tool 100 further includes a protective member 23 detachably mounted on the outer surface of the shield 30. The protective member 23 is made of a soft material. The protective member 23 covers at least the limiting end surface 331. In this embodiment, the protective member 23 can be detachably mounted to the shield 30 in a direction perpendicular to the first axis 101.

Further, the shield 30 is made of a metal material, and the protective member 23 is made of a plastic material.

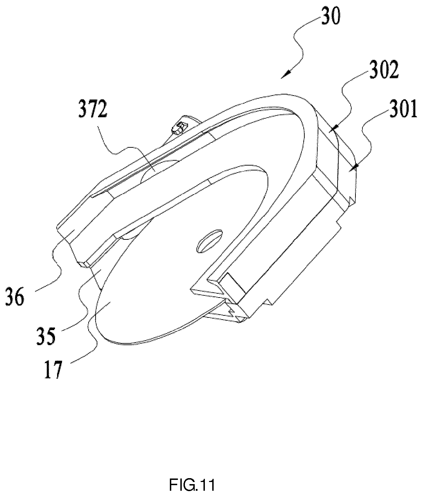

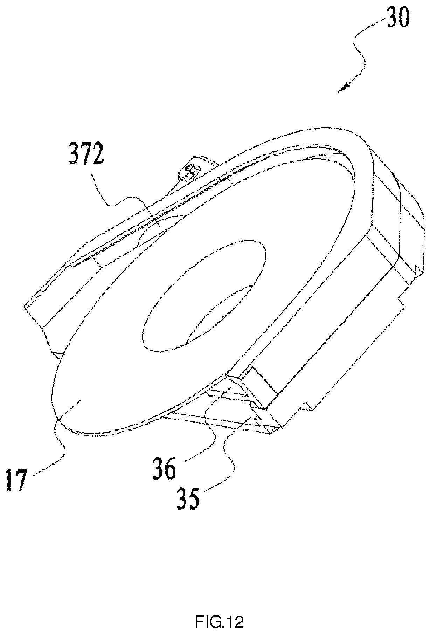

As illustrated in FIG. 1 and FIGS. 9 to 12, the shield 30 further includes a partition plate 34 that divides a space enclosed by the shield 30 into a first mounting area 35 and a second mounting area 36 in an axial direction of the third axis 103. As illustrated in FIGS. 5, 11 and 12, depending on the working condition and the type of the cutting member 17, the cutting member 17 may be mounted to a first axial position of the drive shaft 161 such that the cutting member 17 is located in the first mounting area 35, or the cutting member 17 may be mounted to a second axial position of the drive shaft 161 such that the cutting member 17 is located in the second mounting area 36.

The shield 30 is provided with a chip discharging tube 37. A chip discharging passage 37 for discharging chips inside the shield 30 is enclosed by the chip discharging tube 37. The chip discharging passage communicates with the first mounting area 35 and the second mounting area 36 separately. Specifically, two ends of the chip discharging tube 37 include a dust inlet and a dust outlet respectively. The dust inlet is located at the end of the chip discharging passage close to the cutting member 17. The dust outlet is located at the end of the chip discharging passage away from the cutting member 17. The dust inlet is divided by the partition plate 34 into a first dust inlet 371 and a second dust inlet 372. The chip discharging passage is communicated with the first mounting area 35 via the first dust inlet 371. The chip discharging passage is communicated with the second mounting area 36 via the second dust inlet 372. In this way, when the cutting member 17 is mounted in the first mounting area 35, chips can be discharged through the first dust inlet 371. When the cutting member 17 is mounted in the second mounting area 36, chips can be discharged through the second dust inlet 372. Therefore, chips on both sides of the partition plate 34 can be effectively discharged.

In this example, the cutting member 17 is generally a circular saw blade. To improve the chip discharging effect, an extension direction of the chip discharging passage is substantially parallel to a tangential direction of an edge of the saw blade.

The end, where the dust outlet is provided, of the chip discharging tube 37 is provided with a tube cap 38 for closing the chip discharging tube 37. In this way, when chips need to be discharged through the chip discharging tube 37, it is feasible to open the tube cap 38 so that the chip discharging tube 37 is connected to a suction cleaner. When chips do need to be discharged through the chip discharging tube 37, it is feasible to close the tube cap 38 so as to effectively prevent chips from flying out of the chip discharging tube 37 to injure the user.

From the point of assembly, the shield 30 further includes a rear shield portion 301 and a front shield portion 302. The rear shield portion 301 includes the mounting portion 32 and a part of the enclosing portion 31. The front shield portion 302 includes the inward edge 33 and another part of the enclosing portion 31. The rear shield portion 301 and the front shield portion 302 are detachably connected to each other in a direction parallel to the third axis 103. When assembled together, the rear shield portion 301 and the front shield portion 302 form the above-mentioned shield 30. In this way, when one of the rear shield portion 301 and the front shield portion 302 becomes worn, the user may repair or replace only the worn one of them, thereby reducing the repair cost.

More specifically, the hand-held cutting tool 100 in this embodiment is a mini electric circular saw. When the user holds the handle portion 111 with one hand and holds the auxiliary handle 22 with the other hand, the cutting member 17 and the shield 30 are located on the left side of the hand holding the handle portion 111, the operating member 13 is located under the hand holding the handle portion 111, and the battery pack 18 is located on a rear side the user's hand holding the handle portion 111. For details, see an azimuth coordinate system in FIG. 1.

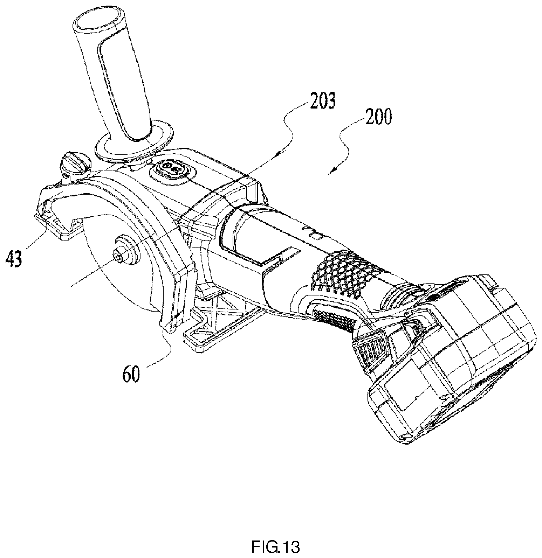

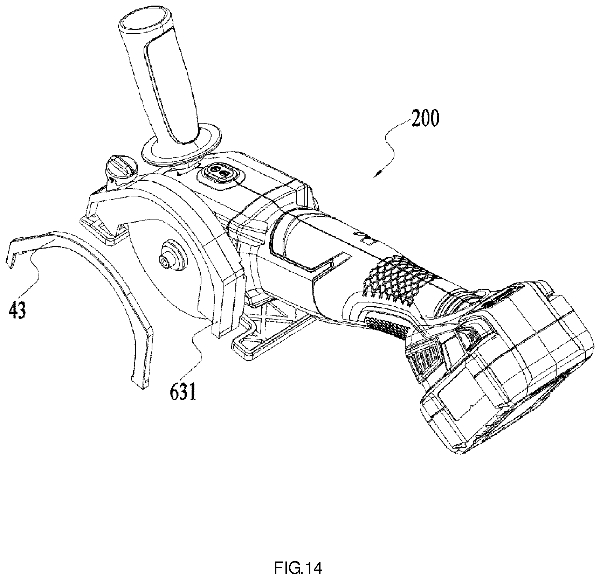

As illustrated in FIGS. 13 and 14, the present disclosure further contemplates a hand-held cutting tool 200 that differs from the hand-held cutting tool 100 only in that the hand-held cutting tool 200 has a protective member 43 different from the protective member 23. The parts of the hand-held cutting tool 100 that are suitable for the hand-held cutting tool 200 can all be applied to the hand-held cutting tool 200, and the details thereof are not described herein again. Thus, in this example, the protective member 43 and a shield 60 are detachably connected to each other, and the protective member 43 may be manipulated by the user to be coupled to the shield 60 in a direction parallel to a third axis 203 so as to cover a limiting end surface 631.

The above illustrates and describes basic principles, main features and advantages of the present disclosure. It is to be understood by those skilled in the art that various modifications can be made falling within the scope of the claims.

## Claims

1. A hand-held cutting tool (100) comprising:
a cutting member (17) for cutting a workpiece;
a motor (12) having an output shaft (121) configured to rotate around a first axis (101);
a housing (11) provided with a handle portion (111) for a user to hold;
a drive shaft (161) configured to drive the cutting member to rotate around a third axis (103) perpendicular to the first axis;
a transmission device (15) configured to realize transmission between the output shaft and the drive shaft;
a shield (30) configured to block chips around the cutting member and enclose at least in part the cutting member in a circumferential direction of the third axis;
an auxiliary handle (22) for a user to hold with the other hand when the user is holding the handle portion with one hand and
a baseplate (14) having a supporting surface (141) connected to the housing and rotatable about a second axis (102), wherein the supporting surface is disposed on a side of the baseplate away from the housing; wherein the first axis of the output shaft obliquely intersects the supporting surface of the baseplate, the supporting surface is parallel to the third axis, the shield and the handle portion are disposed on a same side of the supporting surface, and the second axis is parallel to the third axis of the cutting member; and
the hand-held cutting tool further comprises a battery pack (18) detachably coupled to the housing in a first direction (D) and configured to power the motor, the battery pack located at a rear end of the handle portion;
wherein the first direction obliquely intersects the first axis; and
the handle portion extends along a direction of the first axis and an included angle (B) between the first direction and the first axis is greater than or equal to 30 degrees and less than or equal to 60 degrees, wherein the hand-held cutting tool further comprises a shaft lock device (21) configured to lock rotation of the driving drive shaft; wherein
the shaft lock device comprises an operation button (212) to be pressed by the user, the shaft locking device locking rotation of the drive shaft when the operation button is pressed,
the auxiliary handle, the operation button, the handle portion, and the battery pack, are arranged sequentially along the first axis, the operation button being disposed between the auxiliary handle and the handle portion, the auxiliary handle being disposed at a front end of the hand-held cutting tool, and
a longitudinal direction of the auxiliary handle is distanced from the third axis.

2. The hand-held cutting tool of claim 1, wherein the handle portion of the housing is symmetrically arranged about a medium plane (104) parallel to the first axis and the shield is disposed on a side of the medium plane of the handle portion.

3. The hand-held cutting tool of claim 1, further comprising an operating member (13) for the user to control the motor, wherein the operating member is disposed on a side of a plane defined by the first axis around which the output shaft rotates and the third axis around which the cutting member rotates.

4. The hand-held cutting tool of claim 1, further comprising an operating member (13) for the user to control the motor, wherein the operating member and the baseplate are disposed on a same side of the housing.

5. The hand-held cutting tool of claim 1, wherein the motor is at least partially disposed in a space enclosed by the handle portion.

6. The hand-held cutting tool of claim 1, wherein the shield comprises a partition plate (34) dividing a space enclosed by the shield into a first mounting area (35) and a second mounting area (36) in an axial direction about the third axis and the cutting member is mounted to a first axial position so that the cutting member is disposed in the first mounting area or mounted to a second axial position so that the cutting member is disposed in the second mounting area.

7. The hand-held cutting tool of claim 6, wherein the shield is provided with a chip discharging passage for discharging chips from an interior of the shield and the chip discharging passage communicates with the first mounting area and the second mounting area separately.

8. The hand-held cutting tool of claim 1, wherein the baseplate has at least a first rotation position and a second rotation position relative to the housing, an included angle between the supporting surface and the first axis when the baseplate is at the first rotation position is smaller than that when the baseplate is at the second rotation position, and the hand-held cutting tool further comprises a biasing member (20) configured to bias the baseplate to rotate from the first rotation position to the second rotation position.

9. A hand-held cutting tool (100) comprising:
a cutting member (17) for cutting a workpiece;
a motor (12) having an output shaft (121) configured to rotate around a first axis (101);
a housing (11) provided with a handle portion (111) for a user to hold;
an operating member (13) for the user to control the motor;
a drive shaft (161) configured to drive the cutting member to rotate around a third axis (103) perpendicular to the first axis;
a transmission device (15) configured to realize transmission between the output shaft and the drive shaft;
a shield (30) configured to block chips around the cutting member and enclose at least in part the cutting member in a circumferential direction of the third axis;
an auxiliary handle (22) for a user to hold with the other hand when the user is holding the handle portion with one hand and
a baseplate (14) having a supporting surface (141) connected to the housing and rotatable about a second axis (102), wherein the supporting surface is disposed on a side of the baseplate away from the housing;
wherein the first axis of the output shaft obliquely intersects the supporting surface of the baseplate, the supporting surface is parallel to the third axis, and when the user holds the handle portion, the cutting member and the shield are located on a left side of a hand holding the handle portion; and
the hand-held cutting tool further comprises a battery pack (18) detachably mounted to the handle portion in a first direction (D) and configured to power the motor;
wherein the operating member is located under the user's hand holding the handle portion, and the battery pack is located at a rear of the hand holding the handle portion; and
the handle portion extends along a direction of the first axis, and an included angle (B) between the first direction and the first axis is greater than or equal to 30 degrees and less than or equal to 60 degrees;
wherein the hand-held cutting tool further comprises a shaft lock device (21) configured to lock rotation of the driving drive shaft; wherein the shaft lock device comprises an operation button (212) to be pressed by the user, the shaft locking device locking rotation of the drive shaft when the operation button is pressed,
the auxiliary handle, the operation button, the handle portion, and the battery pack are arranged sequentially along the first axis, the operation button being disposed between the auxiliary handle and the handle portion, the auxiliary handle being disposed at a front end of the hand-held cutting tool, and
a longitudinal direction of the auxiliary handle is distanced from the third axis.

10. The hand-held cutting tool of claim 9, wherein the operating member and the auxiliary handle are disposed on two sides of a plane defined by the first axis around which the output shaft rotates and the third axis around which the cutting member rotates.

## Patentansprüche

1. Handgehaltenes Schneidwerkzeug (100), umfassend:
ein Schneidelement (17) zum Schneiden eines Werkstücks;
einen Motor (12) mit einer Ausgangswelle (121), die dafür ausgelegt ist, sich um eine erste Achse (101) zu drehen;
ein Gehäuse (11), das mit einem Griffteil (111) versehen ist, das ein Benutzer halten kann;
eine Antriebswelle (161), die dafür ausgelegt ist, das Schneidelement so anzutreiben, dass es sich um eine dritte Achse (103) senkrecht zur ersten Achse dreht;
eine Übertragungsvorrichtung (15), die dafür ausgelegt ist, eine Übertragung zwischen der Abtriebswelle und der Antriebswelle zu realisieren;
eine Abschirmung (30), die dafür ausgelegt ist, Späne um das Schneidelement herum zu blockieren und das Schneidelement in einer Umfangsrichtung der dritten Achse zumindest teilweise zu umschließen;
einen Hilfsgriff (22), den ein Benutzer mit der anderen Hand halten kann, wenn der Benutzer den Griffteil mit einer Hand hält, eine Grundplatte (14) mit einer Stützfläche (141), die mit dem Gehäuse verbunden und um eine zweite Achse (102) drehbar ist,
wobei die Stützfläche auf einer vom Gehäuse abgewandten Seite der Grundplatte angeordnet ist;
wobei die erste Achse der Abtriebswelle die Stützfläche der Grundplatte schräg schneidet, die Stützfläche parallel zur dritten Achse ist, die Abschirmung und der Griffteil auf derselben Seite der Stützfläche angeordnet sind und die zweite Achse parallel zur dritten Achse des Schneidelementes ist; und
das handgehaltene Schneidwerkzeug ferner einen Batteriesatz (18) umfasst, der in einer ersten Richtung (D) abnehmbar mit dem Gehäuse verbunden und dafür ausgelegt ist, den Motor anzutreiben, wobei der Batteriesatz an einem hinteren Ende des Griffteils angeordnet ist;
wobei die erste Richtung die erste Achse schräg schneidet; und
der Griffteil sich entlang einer Richtung der ersten Achse erstreckt und ein eingeschlossener Winkel (B) zwischen der ersten Richtung und der ersten Achse größer oder gleich 30 Grad und kleiner oder gleich 60 Grad ist,
wobei das handgehaltene Schneidwerkzeug ferner eine Wellenverriegelungsvorrichtung (21) umfasst, die dafür ausgelegt ist, die Drehung der antreibenden Antriebswelle zu verriegeln;
wobei die Wellenverriegelungsvorrichtung einen Betätigungsknopf (212) aufweist, der durch den Benutzer zu drücken ist, wobei die Wellenverriegelungsvorrichtung die Drehung der Antriebswelle blockiert, wenn der Betätigungsknopf gedrückt wird,
der Hilfsgriff, der Betätigungsknopf, der Griffteil und der Batteriesatz aufeinanderfolgend entlang der ersten Achse angeordnet sind, wobei der Betätigungsknopf zwischen dem Hilfshandgriff und dem Griffteil angeordnet ist und der Hilfshandgriff an einem vorderen Ende des handgehaltenen Schneidwerkzeugs angeordnet ist, und
eine Längsrichtung des Hilfsgriffs mit Abstand zur dritten Achse liegt.

2. Handgehaltenes Schneidwerkzeug nach Anspruch 1, wobei der Griffteil des Gehäuses symmetrisch um eine Mittelebene (104) parallel zur ersten Achse angeordnet ist und die Abschirmung auf einer Seite der Mittelebene des Griffteils angeordnet ist.

3. Handgehaltenes Schneidwerkzeug nach Anspruch 1, ferner aufweisend ein Bedienungselement (13) für den Benutzer, um den Motor zu steuern, wobei das Bedienungselement auf einer Seite einer Ebene angeordnet ist, die durch die erste Achse, um die sich die Abtriebswelle dreht, und die dritte Achse, um die sich das Schneidelement dreht, angeordnet ist.

4. Handgehaltenes Schneidwerkzeug nach Anspruch 1, ferner aufweisend ein Bedienungselement (13) für den Benutzer, um den Motor zu steuern, wobei das Bedienungselement und die Grundplatte auf derselben Seite des Gehäuses angeordnet sind.

5. Handgehaltenes Schneidwerkzeug nach Anspruch 1, bei dem der Motor zumindest teilweise in einem vom Griffteil umschlossenen Raum angeordnet ist.

6. Handgehaltenes Schneidwerkzeug nach Anspruch 1, wobei die Abschirmung eine Trennplatte (34) aufweist, die einen von der Abschirmung umschlossenen Raum in einen ersten Befestigungsbereich (35) und einen zweiten Befestigungsbereich (36) in einer axialen Richtung um die dritte Achse herum unterteilt, und das Schneidelement in einer ersten axialen Position befestigt ist, sodass das Schneidelement im ersten Befestigungsbereich angeordnet ist, oder in einer zweiten axialen Position befestigt ist, sodass das Schneidelement im zweiten Befestigungsbereich angeordnet ist.

7. Handgehaltenes Schneidwerkzeug nach Anspruch 6, wobei die Abschirmung mit einem Spanabführungskanal zum Abführen von Spänen aus dem Inneren der Abschirmung versehen ist und der Spanabführungskanal mit dem ersten Bereich und dem zweiten Bereich getrennt voneinander in Verbindung steht.

8. Handgehaltenes Schneidwerkzeug nach Anspruch 1, wobei die Grundplatte mindestens eine erste Drehposition und eine zweite Drehposition relativ zum Gehäuse aufweist, wobei ein eingeschlossener Winkel zwischen der Stützfläche und der ersten Achse kleiner ist, wenn sich die Grundplatte in der ersten Drehposition befindet, als der, wenn sich die Grundplatte in der zweiten Drehposition befindet, und wobei das handgehaltene Schneidwerkzeug ferner ein Vorspannelement (20) aufweist, das dafür ausgelegt ist, die Grundplatte so vorzuspannen, dass sie sich von der ersten Drehposition in die zweite Drehposition dreht.

9. Handgehaltenes Schneidwerkzeug (100), umfassend:
ein Schneidelement (17) zum Schneiden eines Werkstücks; einen Motor (12) mit einer Ausgangswelle (121), die dafür ausgelegt ist, sich um eine erste Achse (101) zu drehen; ein Gehäuse (11), das mit einem Griffteil (111) versehen ist, das ein Benutzer halten kann;
ein Bedienungselement (13) für den Benutzer zur Steuerung des Motors;
eine Antriebswelle (161), die dafür ausgelegt ist, das Schneidelement so anzutreiben, dass es sich um eine dritte Achse (103) senkrecht zur ersten Achse dreht;
eine Übertragungsvorrichtung (15), die dafür ausgelegt ist, eine Übertragung zwischen der Abtriebswelle und der Antriebswelle zu realisieren;
eine Abschirmung (30), die dafür ausgelegt ist, Späne um das Schneidelement herum zu blockieren und das Schneidelement in einer Umfangsrichtung der dritten Achse zumindest teilweise zu umschließen;
einen Hilfsgriff (22) für einen Benutzer, um mit der anderen Hand, wenn der Benutzer den Griffteil mit einer Hand hält, eine Grundplatte (14) mit einer Stützfläche (141) zu halten, die mit dem Gehäuse verbunden und um eine zweite Achse (102) drehbar ist, wobei die Stützfläche auf einer Seite der Grundplatte weg vom Gehäuse angeordnet ist;
wobei die erste Achse der Abtriebswelle die Stützfläche der Grundplatte schräg schneidet, die Stützfläche parallel zur dritten Achse ist und dritten Achse ist und wenn der Benutzer den Griffteil hält, das Schneidelement und die Abschirmung auf einer linken Seite einer Hand angeordnet sind, die den Griffteil hält; und
das handgehaltene Schneidwerkzeug ferner einen Batteriesatz (18) aufweist, der abnehmbar am Griffteil in einer ersten Richtung (D) angebracht und dafür ausgelegt ist, den Motor anzutreiben;
wobei sich das Bedienungselement unter der Hand des Benutzers befindet, die den Griffteil hält, und der Batteriesatz sich an der Rückseite der Hand befindet, die den Griffteil hält; und
der Griffteil sich entlang einer Richtung der ersten Achse erstreckt und ein eingeschlossener Winkel (B) zwischen der ersten Richtung und der ersten Achse größer oder gleich 30 Grad und kleiner oder gleich 60 Grad ist;
wobei das handgehaltene Schneidwerkzeug ferner eine Wellenverriegelungsvorrichtung (21) aufweist, die dafür ausgelegt ist, die Drehung der antreibenden Antriebswelle zu verriegeln;
wobei die Vorrichtung zur Wellenverriegelung einen Betätigungsknopf (212) aufweist, der vom Benutzer zu drücken ist, wobei die Vorrichtung zur Wellenverriegelung die Drehung der Antriebswelle verriegelt, wenn der Betätigungsknopf gedrückt wird, wobei der Hilfsgriff, der Betätigungsknopf, der Griffteil und der Batteriepack sequentiell entlang der ersten Achse angeordnet sind, wobei der Betätigungsknopf zwischen dem Hilfsgriff und dem Griffteil angeordnet ist, wobei der Hilfsgriff an einem vorderen Ende des handgehaltenen Schneidwerkzeugs angeordnet ist, und eine Längsrichtung des Hilfsgriffs mit Abstand zur dritten Achse liegt.

10. Handgehaltenes Schneidwerkzeug nach Anspruch 9, bei dem das Bedienungselement und der Hilfsgriff auf zwei Seiten einer Ebene angeordnet sind, die durch die erste Achse, um die sich die Abtriebswelle dreht, und die dritte Achse, um die sich das Schneidelement dreht, definiert ist.

## Revendications

1. Outil de coupe manuel (100) comprenant :
un membre de coupe (17) pour couper une pièce ;
un moteur (12) ayant un arbre de sortie (121) configuré pour tourner sur un premier axe (101) ;
un logement (11) doté d'une partie de poignée (111) destinée à être tenue par un utilisateur ;
un arbre d'entraînement (161) configuré pour entraîner le membre de coupe en rotation sur un troisième axe (103) perpendiculaire au premier axe ;
un dispositif de transmission (15) configuré pour réaliser la transmission entre l'arbre de sortie et l'arbre d'entraînement ;
un écran (30) configuré pour bloquer des copeaux autour du membre de coupe et entourer au moins en partie le membre de coupe dans une direction circonférentielle du troisième axe ;
une poignée auxiliaire (22) destinée à être tenue par un utilisateur avec l'autre main lorsque l'utilisateur tient la partie de poignée avec une main et
une plaque de base (14) ayant une surface de support (141) reliée au logement et pouvant tourner sur un deuxième axe (102), dans lequel la surface de support est disposée sur un côté de la plaque de base à distance du logement ;
dans lequel le premier axe de l'arbre de sortie coupe de manière oblique la surface de support de la plaque de base, la surface de support est parallèle au troisième axe, l'écran et la partie de poignée sont disposés sur un même côté de la surface de support, et le deuxième axe est parallèle au troisième axe du membre de coupe ; et
l'outil de coupe manuel comprend un pack de batterie (18) couplé au logement de manière séparable dans une première direction (D) et configuré pour alimenter le moteur, le pack de batterie étant situé à une extrémité arrière de la partie de poignée ;
dans lequel la première direction coupe le premier axe de manière oblique ; et
la partie de poignée s'étend le long d'une direction du premier axe et un angle inclus (B) entre la première direction et le premier axe est supérieur ou égal à 30 degrés et inférieur ou égal à 60 degrés,
dans lequel l'outil de coupe manuel comprend en outre un dispositif de verrou d'arbre (21) configuré pour verrouiller la rotation de l'arbre d'entraînement entraînant ; dans lequel
le dispositif de verrou d'arbre comprend un bouton d'actionnement (212) destiné à être enfoncé par l'utilisateur, le dispositif de verrou d'arbre verrouillant la rotation de l'arbre d'entraînement lorsque le bouton d'actionnement est enfoncé,
la poignée auxiliaire, le bouton d'actionnement, la partie de poignée et le pack de batterie sont agencés de manière séquentielle le long du premier axe, le bouton d'actionnement étant disposé entre la poignée auxiliaire et la partie de poignée, la poignée auxiliaire étant disposée à une extrémité avant de l'outil de coupe manuel, et
une direction longitudinale de la poignée auxiliaire est distancée du troisième axe.

2. Outil de coupe manuel selon la revendication 1, dans lequel la partie de poignée du logement est agencée symétriquement autour d'un plan médian (104) parallèle au premier axe et l'écran est disposé sur un côté du plan médian de la partie de poignée.

3. Outil de coupe manuel selon la revendication 1, comprenant en outre un membre d'actionnement (13) pour que l'utilisateur commande le moteur, dans lequel le membre d'actionnement est disposé sur un côté d'un plan défini par le premier axe autour duquel l'arbre de sortie tourne et le troisième axe autour duquel le membre de coupe tourne.

4. Outil de coupe manuel selon la revendication 1, comprenant en outre un membre d'actionnement (13) pour que l'utilisateur commande le moteur, dans lequel le membre d'actionnement et la plaque de base sont disposés sur un même côté du logement.

5. Outil de coupe manuel selon la revendication 1, dans lequel le moteur est au moins partiellement disposé dans un espace entouré par la partie de poignée.

6. Outil de coupe manuel selon la revendication 1, dans lequel l'écran comprend une plaque de séparation (34) divisant un espace entouré par l'écran en une première zone de montage (35) et une seconde zone de montage (36) dans une direction axiale sur le troisième axe, et le membre de coupe est monté à une première position axiale de façon à ce que le membre de coupe soit disposé dans la première zone de montage ou monté à une seconde position axiale de façon à ce que le membre de coupe soit disposé dans la seconde zone de montage.

7. Outil de coupe manuel selon la revendication 6, dans lequel l'écran est doté d'un passage de décharge de copeaux pour décharger des copeaux d'un intérieur de l'écran et le passage de décharge de copeaux communique avec la première zone de montage et la seconde zone de montage.

8. Outil de coupe manuel selon la revendication 1, dans lequel la plaque de base présente au moins une première position de rotation et une seconde position de rotation par rapport au logement, un angle inclus entre la surface de support et le premier axe lorsque la plaque de base est à la première position de rotation est plus petit que lorsque la plaque de base est à la seconde position de rotation, et l'outil de coupe manuel comprend en outre un membre de décalage (20) configuré pour décaler la plaque de base pour tourner de la première position de rotation à la seconde position de rotation.

9. Outil de coupe manuel (100) comprenant :
un membre de coupe (17) pour couper une pièce ;
un moteur (12) ayant un arbre de sortie (121) configuré pour tourner sur un premier axe (101) ;
un logement (11) doté d'une partie de poignée (111) destinée à être tenue par un utilisateur ;
un membre d'actionnement (13) pour que l'utilisateur commande le moteur ;
un arbre d'entraînement (161) configuré pour entraîner le membre de coupe à tourner sur un troisième axe (103) perpendiculaire au premier axe ;
un dispositif de transmission (15) configuré pour réaliser la transmission entre l'arbre de sortie et l'arbre d'entraînement ;
un écran (30) configuré pour bloquer des copeaux autour du membre de coupe et entourer au moins en partie le membre de coupe dans une direction circonférentielle du troisième axe ;
une poignée auxiliaire (22) destinée à être tenue par un utilisateur avec l'autre main lorsque l'utilisateur tient la partie de poignée avec une main et
une plaque de base (14) ayant une surface de support (141) reliée au logement et pouvant tourner sur un deuxième axe (102), dans lequel la surface de support est disposée sur un côté de la plaque de base à distance du logement ;
dans lequel le premier axe de l'arbre de sortie coupe de manière oblique la surface de support de la plaque de base, la surface de support est parallèle au troisième axe, et lorsque l'utilisateur tient la partie de poignée, le membre de coupe et l'écran sont situés sur un côté gauche d'une main tenant la partie de poignée, et
l'outil de coupe manuel comprend un pack de batterie (18) monté de manière séparable sur la partie de poignée dans une première direction (D) et configuré pour alimenter le moteur ;
dans lequel le membre d'actionnement est situé sous la main de l'utilisateur tenant la partie de poignée, et le pack de batterie est situé à un arrière de la main tenant la partie de poignée ; et
la partie de poignée s'étend le long d'une d'une direction du premier axe et un angle inclus (B) entre la première direction et le premier axe est supérieur ou égal à 30 degrés et inférieur ou égal à 60 degrés,
dans lequel l'outil de coupe manuel comprend en outre un dispositif de verrou d'arbre (21) configuré pour verrouiller la rotation de l'arbre d'entraînement entraînant ; dans lequel
le dispositif de verrou d'arbre comprend un bouton d'actionnement (212) destiné à être enfoncé par l'utilisateur, le dispositif de verrou d'arbre verrouillant la rotation de l'arbre d'entraînement lorsque le bouton d'actionnement est enfoncé,
la poignée auxiliaire, le bouton d'actionnement, la partie de poignée et le pack de batterie sont agencés de manière séquentielle le long du premier axe, le bouton d'actionnement étant disposé entre la poignée auxiliaire et la partie de poignée, la poignée auxiliaire étant disposée à une extrémité avant de l'outil de coupe manuel, et une direction longitudinale de la poignée auxiliaire est distancée du troisième axe.

10. Outil de coupe manuel selon la revendication 9, dans lequel le membre d'actionnement et la poignée auxiliaire sont disposés sur deux côtés d'un plan défini par le premier axe autour duquel l'arbre de sortie tourne et le troisième axe autour duquel le membre de coupe tourne.
